# EUROPÄISCHE PATENTSCHRIFT

(11) **EP 1 913 284 B1**
(45) Veröffentlichungstag und Bekanntmachung des Hinweises auf die Patenterteilung: **18.01.2017**
(21) Anmeldenummer: 06775819.3
(22) Anmeldetag: 07.08.2006
(51) Int. Cl.: F16G 13/02, F16G 13/18, B65B 41/14, B65G 17/12, B65H 5/02, B65G 17/32

(54) **VERPACKUNGSMASCHINE MIT EINER KETTE FÜR EINEN MATERIALTRANSPORT**
PACKAGING MACHINE COMPRISING A CHAIN FOR TRANSPORT OF MATERIAL
MACHINE D'EMBALLAGE EQUIPEE D'UNE CHAINE POUR LE TRANSPORT DE MATIERE

(30) Priorität: 11.08.2005 DE 102005038356
(43) Veröffentlichungstag der Anmeldung: 23.04.2008
(73) Patentinhaber: MULTIVAC Sepp Haggenmüller SE & Co. KG, 87787 Wolfertschwenden (DE)
(72) Erfinder: RUZIC, Ivo, 87437 Kempten (DE); EHRMANN, Elmar, 87730 Bad Grönenbach (DE)
(74) Vertreter: Grünecker Patent- und Rechtsanwälte PartG mbB
(86) Internationale Anmeldenummer: PCT/DE2006/001382
(87) Internationale Veröffentlichungsnummer: WO 2007/019823

(56) Entgegenhaltungen:
- EP-A2- 1 503 107
- CA-A1- 2 135 185
- DE-A1- 3 315 419
- DE-A1- 10 351 125
- FR-A- 1 215 244
- FR-A1- 2 218 509
- JP-A- 2004 028 200
- US-A- 2 627 756
- US-A- 3 282 121
- US-A- 4 147 069
- US-A- 4 826 065

## Beschreibung

Die Erfindung betrifft eine Verpackungsmaschine mit einer Kette für einen Materialtransport nach den Oberbegriffen der Ansprüche.

In Maschinen unterschiedlichster Art sind, wie z. B. in der US 4,826,065 A offenbart, Gliederketten als Antriebs- und/oder Transportelemente im Einsatz. So werden beispielsweise bei Verpackungsmaschinen, insbesondere sogenannten Tiefziehmaschinen, Gliederketten verwendet, um über Greifermechanismen eine Verpackungsfolie zu ergreifen und zu den verschiedenen Bearbeitungsstationen der Verpackungsmaschine zu transportieren. Die Gliederkette dient hierbei nicht nur als Transportmittel, sondern auch zur exakten Positionierung der Folie in den verschiedenen Bearbeitungsstationen.

Nachteilig bei der Verwendung einer solchen herkömmlichen Gliederkette ist der Umstand, dass sich durch die Ausgestaltung der Gelenke zwischen den einzelnen Kettengliedern Ritzen und Schmutzkehlen bilden, die leicht verschmutzen können und einer Reinigung schwer zugänglich sind. Für eine dauerhafte Funktion solcher Gliederketten ist zudem eine gewisse Schmierung unerlässlich, da in den einzelnen Gelenken Gleitflächen aneinander gleiten und somit ohne Schmierung einem erhöhten Verschleiß unterliegen.

In den Druckschriften JP 2004-28200, DE 103 51 125 A1, FR 1.215.244 und US 3,282,121 sind Gliederketten beschrieben, die zum Antrieb unterschiedlicher Vorrichtungen gedacht sind, wobei eine Abfolge von starren und flexiblen Kettengliedern vorgesehen ist. Die Verwendung flexibler Kettenglieder ist hierbei für unterschiedliche Zwecke, beispielsweise zur Dämpfung oder für eine Verdrehung der Kette ausgebildet.

Die US 2,627,756 und US 4,147,069 zeigen durchgehende, flexible Antriebsriemen, die aber nicht für einen Materialtransport geeignet sind.

In vielen Anwendungen, insbesondere bei Verpackungsmaschinen der oben beschriebenen Art, ist jedoch eine sorgfältige Reinigung und Sauberkeit von vorrangiger Bedeutung. Insbesondere bei der Verpackung von Lebensmitteln sind hygienische Verhältnisse im Bereich der Verpackungsmaschine zwingend erforderlich. Daher ist bei einer solchen Verpackungsmaschine eine geringe Verschmutzung und die Möglichkeit einer leichten und vollständigen Reinigung auch von Maschinenteilen, wie einer Transport- und Positionierungskette, von Vorteil.

Aufgabe der Erfindung ist es daher, eine Verpackungsmaschine mit einer Kette vorzuschlagen, die gegenüber bekannten Gliederketten bessere Voraussetzungen im Hinblick auf die Hygieneverhältnisse während des Betriebes und bei der Reinigung bietet.

Diese Aufgabe wird ausgehend von einer Verpackungsmaschine mit einer Gliederkette der eingangs beschriebenen Art durch die kennzeichnenden Merkmale des Anspruchs 1 gelöst.

Durch die in den Unteransprüchen genannten Maßnahmen sind vorteilhafte Ausführungen und Weiterbildungen der Erfindung möglich.

Dementsprechend zeichnet sich eine erfindungsgemäße Verpackungsmaschine mit einer Kette dadurch aus, dass flexible Kettenglieder zwischen den starren Kettengliedern vorgesehen und fest mit diesen verbunden sind. Eine solche gelenklose Kette bietet den Vorteil, dass die einzelnen Kettenglieder einschließlich der flexiblen Kettenglieder mit einer geschlossenen Oberfläche ausgestaltet werden können, so dass sich keinerlei Ritzen zwischen etwaigen, aneinander gleitenden Bauelementen ergeben, wie dies bei der Ausbildung von Gelenken der Fall wäre. Durch die flexible, gelenklose Bauweise wird die Gefahr einer dauerhaften Verschmutzung reduziert, die Notwendigkeit einer Schmierung vermieden und eine leichte und schnelle Reinigung der Kettenoberfläche ermöglicht.

Durch diese erfindungsgemäße Ausgestaltung der Kette eignet sich diese besonders für den Einsatz in Bereichen, in denen der Sauberkeit erhöhte Bedeutung zukommt. Dies kann beispielsweise im Bereich der Lebensmittelproduktion -verabarbeitung und/oder -verpackung sein. Aber auch im Bereich chemischer Anlagen kann eine derartige Kette vorteilhaft verwendet werden.

In diesen Fällen ist es weiterhin von Vorteil, wenn die Kette korrosionsbeständig durch eine entsprechende Materialauswahl ausgestaltet ist.

Weiterhin ist es insbesondere im Bereich der Hygiene von Vorteil, wenn die Kette ohne größeren Aufwand keimfrei zu halten ist. Dies wird beispielsweise dadurch erreicht, dass die Kette aus einem oder mehreren gegenüber Heißdampf resistenten Materialien gefertigt wird. Auf diese Weise ist nicht nur eine einfache und schnelle Reinigung, sondern zugleich eine gute Entkeimung möglich, so dass eine solche Kette auch im Bereich höchster hygienischer Anforderungen einsetzbar ist.

Vorteilhafterweise sollte die Kette auch einer großen mechanischen Belastung standhalten. Die oben genannten Vorteile der hohen mechanischen Belastbarkeit, der Korrosionsbeständigkeit und der Resistenz gegen Heißdampf ist beispielsweise durch Verwendung von Metall, insbesondere von nicht rostendem Stahl für die Fertigung der Kette zu erzielen, wobei insbesondere auch eine hohe Maßhaltigkeit während der Belastung gewährleistet ist. Hierdurch kann die Kette zur genauen Positionierung von Maschinenteilen und von zu bearbeitendem Material verwendet werden.

Ein flexibles Kettenglied kann beispielsweise in Form eines flexiblen Metallbandes oder Metalldrahtes vorliegen. Auch ein geflochtenes oder gewundenes Kettenglied nach Art eines Drahtseils, das vorteilhafterweise mit einer Beschichtung zur Bildung einer glatten und geschlossenen Oberfläche versehen werden kann, wäre zur Ausbildung von derartigen flexiblen Kettengliedern verwendbar.

In einer vorteilhaften Ausführungsform der Erfindung wird die erfindungsgemäße Kette bzw. einzelne Glieder der gelenklosen Kette mit Führungselemente versehen, die dazu geeignet sind, mit entsprechenden maschinenseitigen Führungselementen zusammen zu wirken und somit zum einen für eine exakte Positionierung der Kette und zum andern für die Aufnahme etwaiger auftretender Querkräfte sorgen können.

In einer Weiterbildung dieser Ausführungsform werden hierzu die starren Kettenglieder gegenüber den verformbaren Kettengliedern mit einem Überstand versehen. Ein solcher Überstand kann auch als Führung und zur Aufnahme von Querkräften dienen, so dass die Kette neben der mit der Zugbelastung verbunden Transportfunktion noch weitere Funktionen im Hinblick auf die Positionierung von Maschinenkomponenten oder von zu verarbeitendem Material erfüllen kann. Der Überstand kann dabei als Anschlag für ein Antriebselement, z.B. für ein Kettenritzel dienen.

Vorzugsweise werden die Verbindungsstellen zwischen solchen starren und flexiblen Kettengliedern ihrerseits so ausgebildet, dass eine geschlossene und wenig schmutzanfällige und leicht zu reinigende Oberfläche vorliegt. Die Verbindungsstellen können beispielsweise durch Verschweißen oder Verkleben mit einer solchen Oberfläche hergestellt werden.

Erfindungsgemäß werden die starren Kettenglieder an einem durchgehenden flexiblen Zugelement angebracht und an diesem fixiert. Dabei bilden die zwischen den starren Kettengliedern liegenden Bereiche des durchgehenden Zugelementes die flexiblen Kettenglieder. So wäre beispielsweise denkbar, dass starre Kettenglieder auf einem durchgehenden elastischen Band aufgesetzt und mit diesem verschweißt werden. Auch das Anbringen starrer Kettenglieder an einem seilartigen Zugelement, insbesondere mit einer eine durchgehende Oberfläche bildenden Hülle oder Beschichtung, wäre in entsprechender Weise denkbar.

In einer Weiterbildung dieser Ausführungsform werden die starren Kettenglieder mit einer Ausnehmung versehen und auf ein durchgehendes Zugelement aufgefädelt. Nach einer Fixierung der starren Kettenglieder auf einem solchen durchgehenden Zugelement, z.B. wiederum durch Verschweißen oder Verkleben, ergibt sich somit ebenfalls eine erfindungsgemäße Kette.

Weitere Ausführungsformen, z.B. durch Verklemmen der starren Kettenglieder an einem durchgehenden Zugelement sind ebenso denkbar, wie eine Fertigung einer erfindungsgemäßen Kette aus einzelnen starren und flexiblen Kettengliedern, die entsprechend miteinander verbunden, z.B. verschweißt oder verklebt werden. Zur Herstellung der Verbindung derartiger Kettenglieder können darüber hinaus Hinterschneidungen oder entsprechende Formgebungen vorgesehen werden, die die mechanische Belastbarkeit der Verbindungsstelle verbessern.

Wie bereits oben erwähnt, wird eine Kette bei der Erfindung vorteilhafterweise in einer Verpackungsmaschine eingesetzt.

Sie kann hierbei als Antriebskette für einzelne Maschinenkomponenten verwendet werden. Vorzugsweise wird sie jedoch für den Materialtransport und/oder die Materialpositionierung verwendet. Die erfindungsgemäße Kette kann somit als Ersatz für bislang zum Folientransport und zur Folienpositionierung verwendete herkömmliche Gliederketten eingesetzt werden und somit die hygienischen Verhältnisse in einer solchen Verpackungsmaschine erheblich verbessern.

Bevorzugt wird eine erfindungsgemäße Kette mit Greifermechanismen versehen, um das zu transportierende und/oder zu positionierende Material zu ergreifen. Derartige Greifermechanismen werden vorzugsweise an den starren Kettengliedern angebracht, deren Konstruktion ohne Beeinträchtigung der Kettenfunktion leichter an Befestigungselemente angepasst werden kann. Insbesondere unterliegen dabei die Befestigungselemente während des Betriebs keiner Verformung und erlauben daher die Befestigung starrer Bauteile, z.B. von Greifermechanismen.

Bevorzugt werden bei einer erfindungsgemäßen Verpackungsmaschine Klemmeinheiten als Greifermechanismus vorgesehen, die in der Lage sind, eine Verpackungsfolie zu ergreifen, mitzunehmen und somit über die entsprechende Kettenbewegung zu transportieren und zu positionieren. Die Greifermechanismen bzw. die Klemmeinheiten können dabei entsprechend den bekannten Verpackungsmaschinen ausgebildet werden, wobei nunmehr anstelle einer herkömmlichen Gliederkette eine Befestigung der Greifermechanismen an den starren Kettengliedern einer erfindungsgemäßen Kette vorgesehen wird.

Verschiedene Ausführungsformen der Erfindung sind in der Zeichnung dargestellt und werden anhand der Figuren näher erläutert.

### Im Einzelnen zeigen

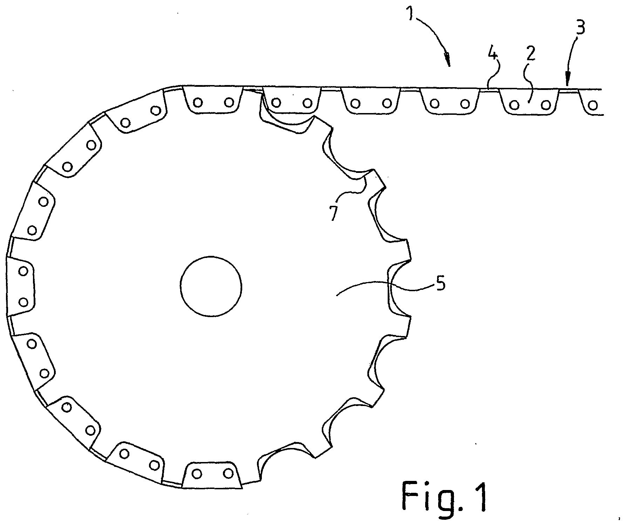

- Figur 1: eine Seitenansicht eines Teils einer erfindungsgemäßen Kette, die auf einem passenden Antriebsritzel aufgelegt ist,

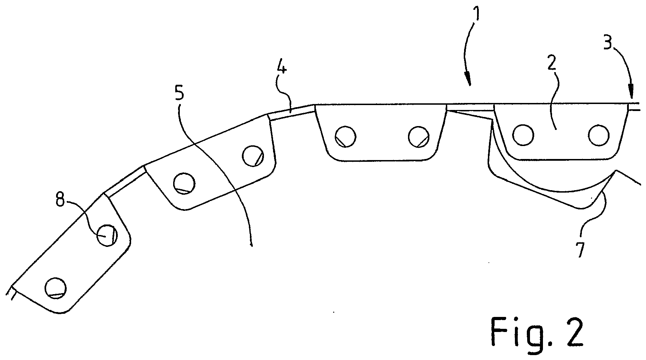

- Figur 2: eine Ausschnittsvergrößerung aus Figur 1,
- Figur 3: eine Kette gemäß den Figuren 1 und 2 mit Greifermechanismus,
- Figur 4: eine Schnittdarstellung einer weiteren Ausführungsform einer erfindungsgemäßen Kette wiederum mit zugehörigem Antriebsritzel,
- Figur 5: eine Ausschnittsvergrößerung aus Figur 4,
- Figur 6: eine Kette gemäß dem zweiten Ausführungsbeispiel mit Greifermechanismus,
- Figur 7: eine Kette gemäß Figur 3 in Wechselwirkung mit maschinenseitigen Führungselementen,
- Figur 8: eine Kette gemäß Figur 6 in Wechselwirkung mit maschinenseitigen Führungselementen und
- Figur 9: einen schematischen Querschnitt durch eine Verpackungsmaschine mit erfindungsgemäßer Kette.

Das erste Ausführungsbeispiel zeigt eine Kette 1, die einstückig gefertigt werden kann. Hierzu wird ein durchgehendes flexibles Metallband zunächst gestanzt und segmentweise umgekantet. Die starren Kettenglieder 2 ergeben sich durch Aussteifung des flexiblen Bandes im Bereich der Abkantung. Die dazwischen liegenden Bereiche ergeben flexible Kettenglieder 4, durch die die starren Kettenglieder 2 beweglich miteinander verbunden sind. Die Kette 1 ist somit in der Lage, über ein Antriebsritzel 5 umzulaufen. Die Zähne 6 weisen dabei eine Kontur 7 auf, die formschlüssig zwischen die starren Kettenglieder 2 eingreifen kann und somit für eine zuverlässige grundpositionsgenaue Mitnahme der Kette 1 sorgt.

Die Kette 1 ist dadurch in der Lage, die mechanischen Funktionen einer herkömmlichen Gliederkette zu erfüllen, wobei jedoch die eingangs geschilderten Nachteile der gelenkig verbundenen Gliederketten vermieden werden.

In den starren Kettengliedern 2 sind weiterhin Bohrungen 8 angebracht, die zur Befestigung weiterer Bauteile, z.B. von Klemmeinheiten 9 dienen.

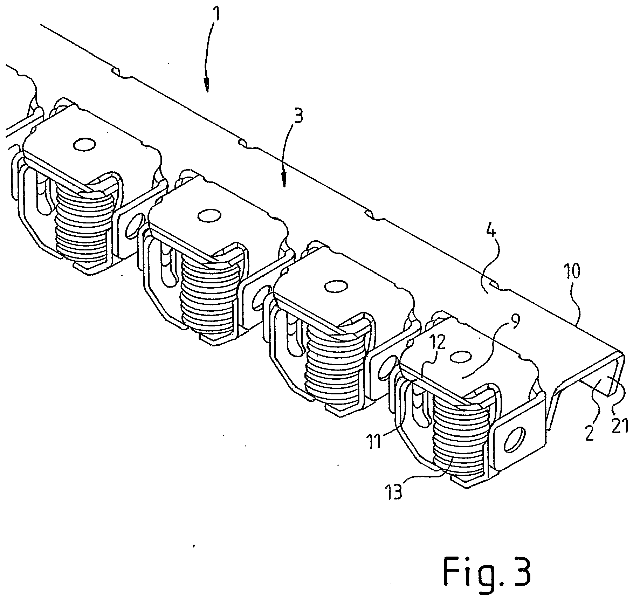

In Figur 3 ist neben den Klemmeinheiten 9 das durch die Abkantungen entlang der Kanten 10 gebildete U-Profil der starren Kettenglieder 2 erkennbar. Durch dieses U-Profil sind die aus dem flexiblen Band 3 gebogenen Kettenglieder 2 starr, während die dazwischen liegenden bandförmigen Bereiche die flexiblen Kettenglieder 4 bilden.

Die Klemmeinheiten 9 oder sonstige an der Kette 1 zu befestigenden Funktionseinheiten können je nach Verwendungszweck unterschiedlich ausgestaltet sein. Vorliegend sind Klemmeinheiten 9 mit gegeneinander spreizbaren Klemmlippen 11, 12 vorgesehen, die mittels einer Druckfeder 13 in die geschlossene Position gedrückt werden. Über einen nicht näher dargestellten Auslösemechanismus können die Klemmlippen 11, 12 gegen den Druck der Druckfeder 13 auseinandergespreizt werden, so dass ein Flachmaterial, z.B. eine Verpackungsfolie zwischen die Klemmlippen 11, 12 eingeführt, durch Druckbeaufschlagung über die Druckfeder 13 eingeklemmt und mit der Bewegung der Kette 1 transportiert und positioniert werden kann.

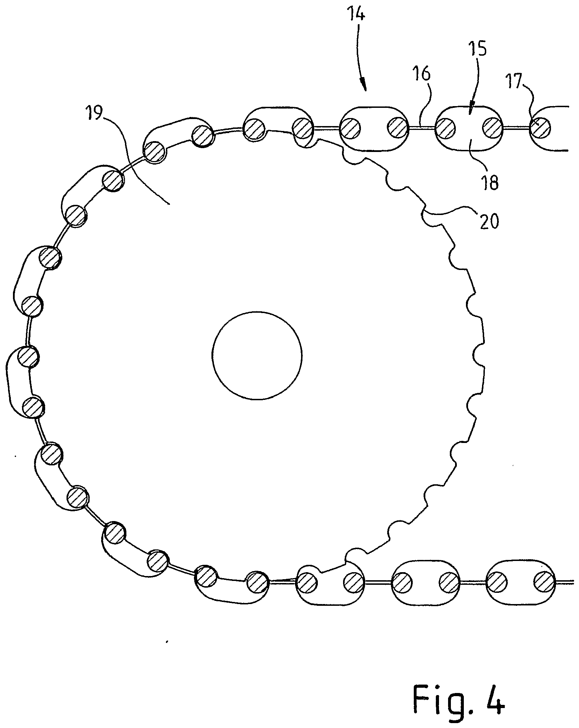

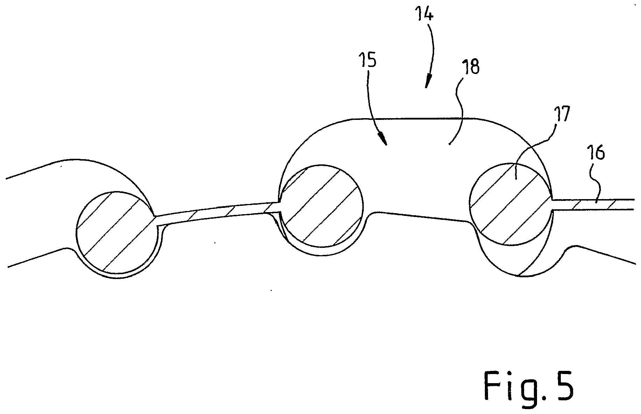

Die Ausführung gemäß den Figuren 4 bis 6 zeigt eine Kette 14, bei der alternierend starre Kettenglieder 15 mit flexiblen Kettengliedern 16 verbünden sind. Die starren Kettenglieder 15 sind hierbei aus zylinderförmigen Querstiften 17 und Seitenplatten 18 zusammengesetzt, so dass die starren Kettenglieder 15 eine ähnliche Form wie die Kettenglieder herkömmlicher gelenkiger Ketten aufweisen, wobei vorliegend jedoch die Querstifte 17 starr mit den Seitenplatten 18 verbunden sind. Die flexiblen Kettenglieder 16 sind wiederum bandförmig ausgebildet und an den Querstiften 17 fest angebracht. Die Verbindung zwischen den einzelnen Bauteilen, d.h. den bandförmigen, flexiblen Kettengliedern 16 und den Querstiften 17 sowie zwischen den Querstiften 17 und den Seitenplatten 18 wird vorzugsweise so hergestellt, dass eine geschlossene Oberfläche und keine Ritzen oder dergleichen entstehen. Dies ist wie oben angeführt beispielsweise durch Verschweißen oder Verkleben denkbar.

Zur Verbesserung der Stabilität können die Querstifte 17 auch in entsprechende Bohrungen oder Hinterschneidungen der Seitenplatten 18 eingelegt und anschließend verbunden, z.B. verschweißt oder verklebt werden.

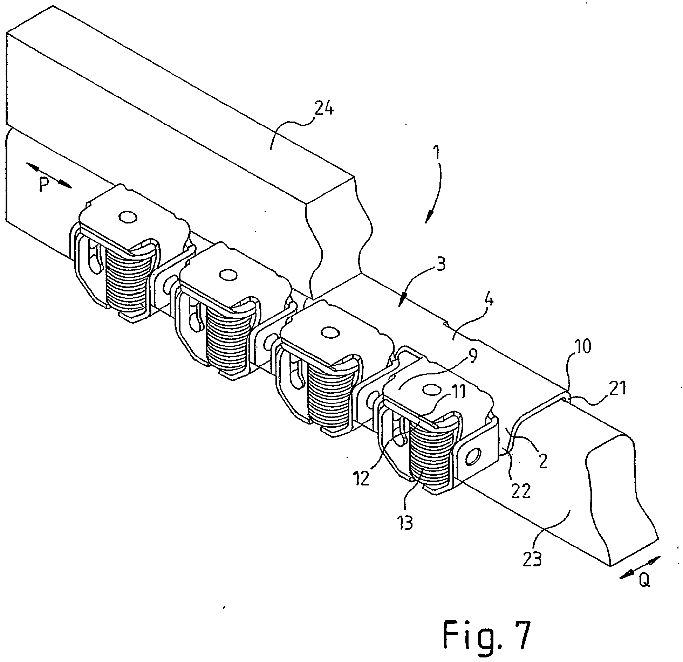

Auch die Ausführung gemäß Figur 7 läuft um ein passendes Antriebsritzel 19 um, das mit einer den Querstiften 17 formschlüssig angepassten Kontur 20 versehen ist.

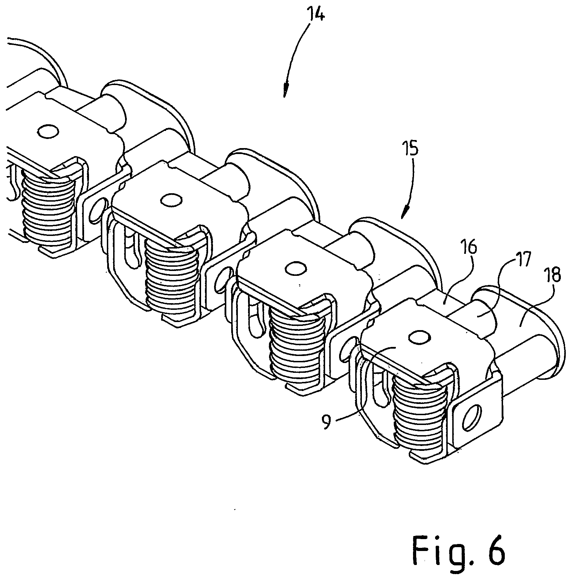

In Figur 6 ist die Ausgestaltung dieser Kettenausführung perspektivisch dargestellt. In dieser Darstellung sind wiederum Klemmeinheiten 9 vorgesehen, die dem vorbeschriebenen Ausführungsbeispiel entsprechen. Auch an eine Kette 14 gemäß den Figuren 4 bis 6 können beliebige Funktionseinheiten montiert werden. Die mechanische Funktion einer solchen Kette 14 ist daher wiederum entsprechend einer herkömmlichen gelenkig ausgebildeten Gliederkette, wobei die erfindungsgemäßen Vorteile hinsichtlich der Reinigung und Hygiene erfüllt sind.

In Figur 7 ist erkennbar, dass die die Seitenschenkel eines U-Profils der starren Kettenglieder 2 bildenden Abkantungen 21, 22 nicht nur der Befestigung der Klemmeinheiten 9, sondern zugleich als Führungselemente zur exakten Positionierung der Kette 1 sowie zur Aufnahme von Querkräften dienen können.

Zu diesem Zweck ist die Kette 1 auf einer Führungsschiene 23 aufgelegt, so dass diese seitlich von den Abkantungen 12, 22 umgriffen wird. Darüber hinaus ist ein Gegenhalter 24 von oben auf die Führungsschiene aufgelegt, so dass die Kette 1 in alle Richtungen, mit Ausnahme der Bewegungsrichtungen gemäß Doppelpfeil P in Ihrer Position fixiert ist. Hierdurch kann die Kette zum einen die in den Klemmeinheiten 9 erfassten Materialien exakt positionieren und zum anderen auch Querkräfte in Richtung des Doppelpfeil Q standhalten.

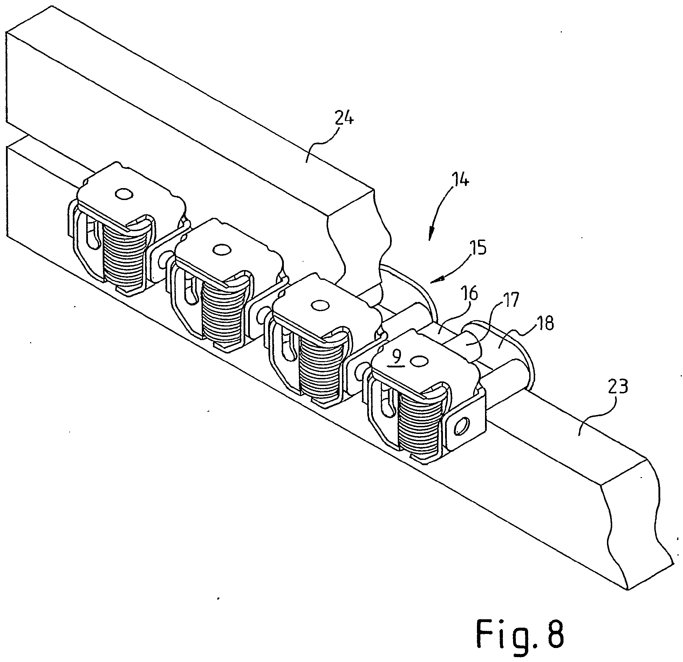

Figur 8 zeigt die Kette 14 gemäß Figur 6 wiederum in Wechselwirkung mit einer Führungsschiene 23 mit Gegenhalter 24. Die Führungsschiene 23 ist hierbei etwas weiter als in der vorgenannten Ausführung vom Gegenhalter 24 beabstandet, damit die Querstifte 17 dazwischen Platz finden. Auch diese Anordnung zeigt eine exakte Positionierung und Führung der Kette 14, die wiederum geeignet ist, hohe Querkräfte durch die Kette 14 aufzunehmen.

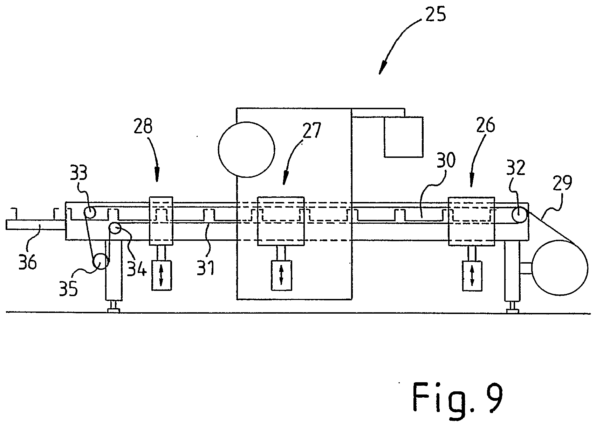

Figur 9 zeigt eine Verpackungsmaschine 25, vorliegend als sogenannte Tiefziehmaschine mit einer Formstation 26, einer Versiegelungsstation 27 sowie einer Schneidstation 28. Aus einer von einer Rolle abgezogenen Folie 29 werden in der Formstation 26 Mulden 30 geformt. Nach der Befüllung der Mulden 30 werden diese in der Versiegelungsstation versiegelt sowie in der Schneidstation 28 auseinander geschnitten.

Die Kette 31 läuft um Umlenkrollen 32, 33, 34 sowie um einen Kettenantrieb 35 herum. Sie transportiert dabei die Folie 29 mit den eingeformten Mulden 30 bis hin zum Austragband 36 der Maschine.

Die Erfindung ist nicht auf das dargestellte Ausführungsbeispiel beschränkt. Wesentlich ist vielmehr die Ausgestaltung einer Kette durch eine Reihe alternierender, starrer Kettenglieder und flexibler Kettenglieder.

### Bezugszeichenliste:

| | | | |
|---|---|---|---|
| 1 | Kette | | |
| 2 | Starres Kettenglied | | |
| 3 | Flexibles Band | | |
| 4 | Flexibles Kettenglied | | |
| 5 | Antriebsritzel | | |
| 6 | Zähne | | |
| 7 | Kontur | | |
| 8 | Bohrung | | |
| 9 | Klemmeinheit | | |
| 10 | Kante | | |
| 11 | Klemmlippe | | |
| 12 | Klemmlippe | | |
| 13 | Druckfeder | | |
| 14 | Kette | | |
| 15 | Starres Kettenglied | | |
| 16 | Flexibles Kettenglied | | |
| 17 | Querstift | | |
| 18 | Seitenplatte | | |
| 19 | Antriebsritzel | | |
| 20 | Kontur | | |
| 21 | Abkantung | | |
| 22 | Abkantung | | |
| 23 | Führungsschiene | | |
| 24 | Gegenhalter | | |
| 25 | Verpackungsmaschine | | |
| 26 | Formstation | | |
| 27 | Versiegelstation | | |
| 28 | Schneidstation | | |
| 29 | Folie | | |
| 30 | Mulde | | |
| 31 | Kette | | |
| 32 | Umlenkrolle | | |
| 33 | Umlenkrolle | 35 | Kettenantrieb |
| 34 | Umlenkrolle | 36 | Austragband |

## Patentansprüche

1. Verpackungsmaschine (25) mit einer Kette (1, 14) für einen Materialtransport, wobei an der Kette (1, 14) Klemmeinheiten (9) zum Einklemmen einer Verpackungsfolie (29) vorgesehen sind, und wobei die Kette (1, 14) eine Reihe aufeinanderfolgender starrer Kettenglieder (2) aufweist, die beweglich miteinander verbunden sind, **dadurch gekennzeichnet, dass** zwischen den starren Kettengliedern (2) flexible Kettenglieder (4) vorgesehen sind und die flexiblen Kettenglieder (4) fest mit den starren Kettengliedern (2) verbunden sind, wobei die starren Kettenglieder (2) auf einem durchgehenden, flexiblen Zugelement (3) angebracht und fixiert sind.

2. Verpackungsmaschine nach Anspruch 1, **dadurch gekennzeichnet, dass** die Kette (1, 14) korrosionsbeständig und/oder gegenüber Heißdampf resistent ist.

3. Verpackungsmaschine nach einem der vorgenannten Ansprüche, **dadurch gekennzeichnet, dass** die Kette (1, 14) wenigstens teilweise aus Metall gefertigt ist.

4. Verpackungsmaschine nach einem der vorgenannten Ansprüche, **dadurch gekennzeichnet, dass** die starren Kettenglieder (2) einen Überstand gegenüber den flexiblen Kettengliedern (4) aufweisen.

5. Verpackungsmaschine nach einem der vorgenannten Ansprüche, **dadurch gekennzeichnet, dass** das durchgehende, flexible Zugelement (3) ein durchgehendes, flexibles Metallband ist.

6. Verpackungsmaschine nach einem der vorgenannten Ansprüche, **dadurch gekennzeichnet, dass** die Klemmeinheiten (9) zum Einklemmen einer Verpackungsfolie (29) an den starren Kettengliedern (2) angebracht sind.

## Claims

1. Packaging machine (25) comprising a chain (1,14) for a material transport, wherein clamping units (9) for clamping a packaging foil (29) are provided on the chain (1,14) and wherein the chain (1,14) comprises a row of successive rigid chain links (2) moveably connected with each other, **characterized in that** flexible chain links (4) are provided between the rigid chain links (2) and the flexible chain links (4) are fixedly connected with the rigid chain links (2), wherein the rigid chain links (2) are mounted on a continuous flexible traction element (3) and fixed thereto.

2. Packaging machine according to claim 1, **characterized in that** the chain (1,14) is corrosion-resistant and/or resistant to super heated steam.

3. Packaging machine according to any of the preceding claims, **characterized in that** the chain (1,14) is, at least in part, made from metal.

4. Packaging machine according to any of the preceding claims, **characterized in that** the rigid chain links (2) project in relation to the flexible chain links (4).

5. Packaging machine according to any of the preceding claims, **characterized in that** the continuous flexible traction element (3) is a continuous, flexible metal band.

6. Packaging machine according to any of the preceding claims **characterized in that** the clamping units (9) for clamping a packing foil (29) are mounted on the rigid chain links (2).

## Revendications

1. Machine d'emballage (25) comprenant une chaine (1, 14) pour un transport de matériau, des unités de serrage (9) destinées à enserrer une feuille d'emballage (29) étant prévues sur la chaine (1, 14), et la chaine (1, 14) présentant une série de maillons de chaine rigides (2) successifs, qui sont reliés les uns aux autres de manière mobile, **caractérisée en ce que** des maillons de chaine flexibles (4) sont prévus entre les maillons de chaine rigides (2), et les maillons de chaine flexibles (4) sont reliés de manière fixe aux mailons de chaine rigides (2), les maillons de chaine rigides (2) étant placés et fixés sur un élément de traction flexible (3) continu.

2. Machine d'emballage selon la revendication 1, **caractérisée en ce que** la chaine (1, 14) présente une bonne tenue à la corrosion et/ou est résistante à la vapeur chaude.

3. Machine d'emballage selon l'une des revendications précédentes, **caractérisée en ce que** la chaine (1, 14) est fabriquée au moins partiellement en métal.

4. Machine d'emballage selon l'une des revendications précédentes, **caractérisée en ce que** les maillons de chaine rigides (2) présentent un débord par rapport aux maillons de chaine flexibles (4).

5. Machine d'emballage selon l'une des revendications précédentes, **caractérisée en ce que** l'élément de traction flexible (3) continu est une bande de métal flexible continue.

6. Machine d'emballage selon l'une des revendications précédentes, **caractérisée en ce que** les unités de serrage (9) destinées à enserrer une feuille d'emballage (29) sont rapportées sur les maillons de chaine rigides (2).
